# DEMANDE DE BREVET EUROPEEN

(11) **EP 2 887 052 A1**
(43) Date de publication de la demande: **24.06.2015**
(21) Numéro de dépôt: 14199855.9
(22) Date de dépôt: 22.12.2014
(51) Int. Cl.: G01N 21/552

(54) **Procédé et dispositif de préparation et d'analyse optique d'un échantillon solide soumis à un environnement controlé, par spectroscopie infrarouge à réflexions internes multiples**

(30) Priorité: 23.12.2013 FR 1363432
(71) Demandeur: COMMISSARIAT A L'ENERGIE ATOMIQUE ET AUX ENERGIES ALTERNATIVES, 75015 Paris (FR)
(72) Inventeur: Licitra, Christophe, 38100 GRENOBLE (FR); Rochat, Névine, 38120 SAINT EGREVE (FR)
(74) Mandataire: Nony

(57) **Abrégé**

L'invention concerne un procédé et dispositif de préparation et d'analyse optique d'un échantillon solide d'une part avec une grande sensibilité et d'autre part qui est représentatif des conditions in-situ auxquelles le(s) matériau(x) solide(s) de l'échantillon peu(ven)t être soumis.

## Description

### Domaine technique

La présente invention concerne un procédé et dispositif de préparation et d'analyse optique d'un échantillon solide soumis par spectroscopie infrarouge à réflexions internes multiples.

L'invention vise à permettre des mesures non destructives d'un échantillon solide d'une part avec une grande sensibilité et d'autre part qui puissent être représentatives des conditions in-situ auxquelles le(s) matériau(x) solide(s) de l'échantillon peu(ven)t être soumis.

Par « lumière infrarouge », on entend dans le cadre de l'invention, une lumière émettant dans la gamme des longueurs d'onde infrarouge, typiquement dans la gamme de nombre d'onde compris entre 1500 et 9000 cm⁻¹.

Par « échantillon solide », on entend dans le cadre de l'invention, une préparation et/ ou un conditionnement de surface d'un substrat, par exemple nettoyage, gravure,... et/ou au moins une couche d'échantillon solide déposée sur le substrat. Lorsque l'échantillon solide est une couche, celle-ci peut être continue ou discontinue.

Par « environnement contrôlé », on entend dans le cadre de l'invention un environnement fluidique dans lequel on peut faire varier les paramètres, tels que pH, composition, pression, température, hygrométrie...en les contrôlant.

Par « prisme », on entend dans le cadre de l'invention, le sens usuel dans le domaine de l'optique, à savoir un bloc d'un matériau transparent à la lumière infrarouge, typiquement obtenu par taillage, comprenant de préférence trois faces sur une base triangulaire dont deux à angle droit l'une par rapport à l'autre, et utilisé en tant qu'instrument optique utilisé pour réfracter la lumière.

Par « angle de prisme », on entend dans le cadre de l'invention, l'angle d'ouverture du prisme, c'est-à-dire l'angle formé entre la face par laquelle le faisceau de lumière infrarouge pénètre et la face en regard avec la face arrière du substrat, i.e. celle avec laquelle un minimum d'espace est créé.

Par « biseau », on entend dans le cadre de l'invention, le sens usuel donné en mécanique, à savoir une surface plane du substrat obtenue en éliminant une arête, aussi appelé chanfrein.

Par « couplage optique », on entend dans le cadre de l'invention, le fait qu'un faisceau de lumière infrarouge arrivant sur un prisme et réfracté par ce dernier puisse pénétrer dans le substrat et subir de multiples réflexions internes en son sein. Une zone de couplage optique selon l'invention est donc une zone par laquelle la lumière infrarouge réfractée initialement par un prisme peut pénétrer dans le substrat pour y subir de multiples réflexions internes.

Par « méplat », on entend dans le cadre de l'invention, le sens usuel donné en mécanique, à savoir une surface plane conférée à un objet.

### Etat de la technique

Il est déjà connu diverses méthodes de mesure par spectroscopie infrarouge à réflexions internes multiples pour l'analyse optique d'un échantillon. Le spectre infrarouge d'un échantillon est établi en faisant passer un faisceau de lumière infrarouge au travers d'un substrat transparent au rayonnement infrarouge du faisceau. Le faisceau subit à l'intérieur du substrat de multiples réflexions. L'échantillon à analyser est en contact avec la surface réfléchissante du substrat ou est elle-même la surface réfléchissante.

Les publications [1] et [2] décrivent l'analyse d'un échantillon solide selon ce principe, les réflexions multiples étant réalisées dans un substrat de silicium, la lumière infrarouge se propageant dans le substrat et étant couplée dans le substrat par deux prismes en silicium agencés sur une face principale du substrat. Le principe de couplage et de propagation de la lumière divulgué dans ces publications permet d'augmenter la sensibilité de la mesure. L'inconvénient du dispositif décrit dans ces publications est qu'il ne fonctionne qu'à l'atmosphère, et donc ne permet pas des mesures représentatives de conditions in-situ auxquelles le matériau de l'échantillon peut être soumis.

La publication [3] divulgue diverses configurations de réflexion internes multiples dont certaines peuvent être utilisées en environnement contrôlé, liquide ou gazeux. L'inconvénient des configurations selon cette publication est que l'élément de réflexions internes multiples ne peut être qu'une partie du montage optique.

Les demandes de brevet et brevets US4602869, US5220401, US5035504, WO03/083458A2, DE19612877C1, DE3227456A1, US5452083A, US6954560B2, WO200547873A2 et WO2005124300A1 décrivent l'analyse par spectroscopie infrarouge à réflexions internes multiples d'un échantillon en environnement liquide. Dans tou(te)s ces demandes de brevets ou brevets, l'échantillon à analyser ne peut être que le liquide en lui-même.

Le brevet US 7956328B2 décrit un système d'analyse optique par spectroscopie infrarouge dans lequel des cellules vivantes sont greffées sur un élément de réflexions internes multiples puis soumises à un environnement variable. L'inconvénient majeur du système divulgué est que l'élément de réflexions internes doit être démonté puis préparé avant chaque mesure. L'opération de préparation, par exemple le dépôt d'une couche de fonctionnalisation, est contrainte par la forme et les dimensions de l'élément de réflexions internes et celui-ci doit être changé pour les expériences ultérieures.

Le but général de l'invention est de proposer une amélioration d'analyse optique d'un échantillon solide par spectroscopie infrarouge à réflexions internes multiples, qui pallie au moins une partie des inconvénients de l'état de l'art mentionnés ci-avant, notamment qui permette des mesures de l'échantillon en environnement contrôlé représentatif de conditions in-situ auxquelles le(s) matériau(x) solide(s) de l'échantillon peu(ven)t être soumis.

Un but particulier de l'invention est de proposer une solution d'analyse optique d'un échantillon solide qui réponde au but général, qui soit simple à mettre en oeuvre, fiable, qui permette un grand nombre de mesures sur un même échantillon sans qu'il y ait lieu de modifier tout ou partie les éléments du dispositif optique d'analyse et qui permette une mise en place rapide d'un échantillon donné avant sa mesure.

### Exposé de l'invention

Pour ce faire, l'invention a tout d'abord pour objet selon une première alternative, un procédé de préparation et d'analyse optique d'un échantillon solide par spectroscopie infrarouge à réflexions internes multiples, le procédé comprenant les étapes suivantes :
a/ réalisation d'au moins un échantillon solide sur une des faces principales, dite face avant, d'un substrat transparent à une lumière infrarouge,
b/ mise en place d'au moins une partie d'au moins un couple de prismes à distance l'un de l'autre, sur l'autre des faces principales, dite face arrière du substrat, l'angle des prismes étant adapté pour permettre des réflexions multiples internes au substrat d'une lumière infrarouge réfractée par l'un des prismes,
c/ mise en place étanche sur le substrat, autour d'au moins une partie de l'échantillon, d'un élément comprenant une chambre présentant une ouverture, de sorte que l'ouverture débouche sur l'échantillon solide en définissant une zone d'interaction étanche vis-à-vis de l'extérieur de la chambre,
d/ alimentation de la chambre avec un fluide aux paramètres contrôlés de sorte à contrôler l'environnement dans la zone d'interaction étanche,
e/ envoi d'un faisceau lumineux infrarouge au travers de l'un des prismes d'un couple,
f/ récupération du faisceau ayant subi des réflexions internes multiples dans le substrat et réémis par l'autre des prismes du couple.

Selon une deuxième alternative du procédé selon l'invention, l'étape b/ est remplacée par une étape b'/ de biseautage des bords du substrat entre la face avant et la face arrière, l'angle des biseaux étant adapté pour permettre des réflexions multiples internes au substrat d'une lumière infrarouge réfractée par l'un des biseaux,
l'étape e/ est remplacée par une étape e'/ d'envoi d'un faisceau lumineux infrarouge au travers d'un des bords biseautés du substrat,
l'étape f/ est remplacée par une étape f'/ de récupération du faisceau ayant subi des réflexions internes multiples dans le substrat et réémis par l'autre des bords biseautés du substrat.

Selon une troisième alternative du procédé selon l'invention, l'étape b/ ou b'/ est remplacée par une étape b"/ de fourniture d'un substrat à au moins deux bords arrondis entre la face avant et la face arrière, l'arrondi des bords étant adapté pour permettre des réflexions multiples internes au substrat d'une lumière infrarouge (I-Re) réfractée par l'un des bords,
l'étape e ou e'/ est remplacée par une étape e"/ d'envoi d'un faisceau lumineux infrarouge au travers d'un des bords arrondis du substrat,
l'étape f ou f'/ est remplacée par f"/ de récupération du faisceau ayant subi des réflexions internes multiples dans le substrat et réémis par l'autre des bords arrondis du substrat.

Un substrat aux bords arrondis, fourni selon l'étape b"/ peut être une galette de silicium directement issue de la production et qui ne nécessite pas d'étape à proprement parler de façonnage d'arrondi des bords. Il peut s'agir également d'un substrat dont les bords sont façonnés pour obtenir les arrondis souhaités.

Quelle que soit l'alternative, l'état de surface et le parallélisme des faces principales d'un substrat selon l'invention doivent être tel qu'il puisse permettre les réflexions internes multiples en son sein sans diffusion vers l'extérieur. De préférence, les deux faces principales subissent un polissage avant la réalisation de l'échantillon solide. Ainsi, les deux faces principales sont avantageusement polies et parallèles entre elles.

Lorsque l'échantillon solide est une couche d'échantillon solide, son dépôt peut être fait sur toute ou partie de la face avant du substrat, c'est-à-dire en définissant au moins une zone d'interaction étanche avec un environnement fluidique contrôlé.

Le montage selon l'invention permet de mesurer des échantillons facilement amovibles contrairement aux dispositifs selon les brevets de l'état de l'art détaillés en préambule. Cela permet de préparer facilement et de manière économique de multiples échantillons solides sur des substrats classiques, tels que ceux réalisés par des procédés de la microélectronique.

Le procédé selon l'invention permet de contrôler l'environnement proche de la surface d'échantillon solide. Les interactions entre l'environnement qui peut être variable mais contrôlé et l'échantillon sont alors analysées grâce à la mesure optique du faisceau infrarouge ayant subi des réflexions internes multiples au sein du substrat, chaque réflexion à la surface de l'échantillon qui permet de sonder le matériau solide de l'échantillon soit par propagation de la lumière directement dans l'échantillon solide, soit par une onde évanescente qui s'établi après le dioptre où a lieu la réflexion totale.

Grâce à l'invention, on obtient l'analyse d'un échantillon solide d'une part avec une grande sensibilité et d'autre part qui est représentatif des conditions in-situ auxquelles le(s) matériau(x) solide(s) de l'échantillon peu(ven)t être soumis.

Selon un premier mode, le fluide alimentant la chambre est un liquide dont on contrôle la température et/ou la pression et/ou le pH et/ou la composition.

Selon une deuxième mode, le fluide alimentant la chambre est un gaz dont on contrôle la température et/ou la pression et/ou le taux d'hygrométrie et/ou la composition. Selon ce deuxième mode, on prévoit avantageusement une étape comprenant g/ de mise sous vide de la chambre avant l'étape d/ d'alimentation avec le gaz.

Selon une première variante, l'étape d/ d'alimentation est réalisée depuis un réservoir de liquide qui s'évapore dans la chambre maintenue sous vide.

Selon une deuxième variante, l'étape d/ d'alimentation est réalisée avec un gaz à taux d'hygrométrie donné, contrôlé dans la chambre.

Selon une troisième variante, l'étape d/ d'alimentation est réalisée avec des espèces réactives, de préférence un plasma, contrôlées dans la chambre. Le plasma peut être généré in-situ dans la chambre ou de manière déportée au sein d'un générateur approprié en communication fluidique avec la chambre.

L'étape c/ de mise en place étanche de l'élément comprend avantageusement le serrage d'un joint périphérique autour de l'ouverture contre la face avant du substrat.

Avantageusement encore, l'étape c/ de mise en place étanche de l'élément comprenant le serrage d'un joint périphérique autour de l'ouverture contre la face avant du substrat, le serrage du joint permettant simultanément de mettre en appui les prismes contre la face arrière du substrat. Ainsi, le joint a en quelque sorte une double fonction puisque en plus de sa fonction première d'étanchéité entre la chambre dans laquelle on contrôle l'environnement et l'extérieur, il permet le serrage efficace des prismes en diminuant considérablement le risque de casse du substrat et donc de l'échantillon.

De préférence, les prismes comprenant chacun un méplat sur leur sommet, les axes de serrage étant alignés avec les méplats et le joint. Le méplat est de préférence parallèle aux faces du substrat. Ainsi, on peut aligner avantageusement l'effort de serrage selon une direction sur laquelle se trouvent le méplat, la zone de couplage optique entre prisme et substrat et le joint.

Selon un mode de réalisation avantageux, l'étape b/ consiste en la mise en place d'au moins une partie de deux couples de prismes, l'angle des prismes et/ou le matériau d'un couple étant différent(s) de celui (ceux) de l'autre couple, la distance entre les deux prismes d'un couple étant égale à celle entre les deux prismes de l'autre couple,
les étapes e/ et f/ sont répétées deux fois consécutivement, une fois avec l'un des couples de prismes et la fois consécutive avec l'autre des couples de prismes.

Selon ce mode, la mise en place de deux couples de prismes différentes selon l'étape b permet de générer deux angles de propagation différents dans le substrat et donc donc deux chemins optiques différents. Ainsi, une mesure pour chaque angle de propagation est réalisée à chaque condition d'environnement dans la chambre représentative d'une condition in-situ. Puis, on ajuste la mesure faite avec l'angle de propagation le plus petit par celle faite avec l'angle le plus grand afin d'obtenir la mesure absolue (auto-référencée) de l'absorption infrarouge de la couche d'échantillon Un tel mode permet de réaliser des mesures absolues d'absorption en soustrayant à chaque condition représentative d'une condition in-situ, deux mesures ayant un chemin optique différent.

L'invention a également pour objet, selon un autre de ses aspects et selon une première alternative, un dispositif de préparation et d'analyse optique d'un échantillon solide par spectroscopie infrarouge à réflexions internes multiples comprenant :
- un substrat présentant deux faces principales, dont une dite face avant et l'autre dite face arrière, et présentant au moins un échantillon solide sur la face avant ;
- au moins un couple de prismes agencés à distance l'un de l'autre et au moins en partie sur la face arrière du substrat, l'angle des prismes étant adapté pour permettre des réflexions multiples internes au substrat d'une lumière infrarouge réfractée par l'un des prismes ;
- un élément comprenant une chambre présentant une ouverture débouchant sur l'échantillon solide en définissant une zone d'interaction étanche vis-à-vis de l'extérieur de la chambre, la chambre étant adaptée pour être alimentée avec un fluide aux paramètres contrôlés de sorte à contrôler l'environnement dans la zone d'interaction étanche.

Le substrat peut être en un matériau d'indice de réfraction égal à celui des prismes. On obtient ainsi la meilleure efficacité de couplage optique.

Alternativement, le substrat est en un matériau d'indice de réfraction différent de celui des prismes. On veille selon cette variante à ce que l'angle des prismes permette d'obtenir la condition de réflexion totale dans le substrat d'indice différent.

Selon une variante de réalisation avantageuse, chacun des prismes comprend un méplat sur son sommet.

Selon un mode de réalisation avantageux, le dispositif comprend deux couples de prismes, l'angle des prismes et/ou le matériau d'un couple étant différent(s) de celui (ceux) de l'autre couple, la distance entre les deux prismes d'un couple étant égale à celle entre les deux prismes de l'autre couple.

L'angle (α) des prismes d'un couple étant compris entre 20 et 60°. Avec cette gamme de valeurs, on tient compte au mieux de la divergence du faisceau infrarouge, de la présence d'une couche de surface d'indice différent de l'air tout en gardant un grand nombre de réflexions internes.

L'invention a également pour objet, selon une deuxième alternative, un dispositif de préparation et d'analyse optique d'un échantillon solide par spectroscopie infrarouge à réflexions internes multiples comprenant :
- un substrat présentant deux faces principales, dont une dite face avant et l'autre dite face arrière, et présentant au moins un échantillon solide sur la face avant, le substrat présentant des biseaux entre la face avant et la face arrière, l'angle des biseaux étant adapté pour permettre des réflexions multiples internes au substrat d'une lumière infrarouge réfractée par l'un des biseaux,
- un élément comprenant une chambre présentant une ouverture débouchant sur l'échantillon solide en définissant une zone d'interaction étanche vis-à-vis de l'extérieur de la chambre, la chambre étant adaptée pour être alimentée avec un fluide aux paramètres contrôlés de sorte à contrôler l'environnement dans la zone d'interaction étanche.

L'invention a également pour objet, selon une troisième alternative, un dispositif de préparation et d'analyse optique d'un échantillon solide par spectroscopie infrarouge à réflexions internes multiples comprenant :
- un substrat présentant deux faces principales, dont une dite face avant et l'autre dite face arrière, et présentant au moins un échantillon solide sur la face avant, le substrat présentant au moins deux bords arrondis entre la face avant et la face arrière, l'arrondi des bords étant adapté pour permettre des réflexions multiples internes au substrat d'une lumière infrarouge réfractée par l'un des bords,
- un élément comprenant une chambre présentant une ouverture débouchant sur l'échantillon solide en définissant une zone d'interaction étanche vis-à-vis de l'extérieur de la chambre, la chambre étant adaptée pour être alimentée avec un fluide aux paramètres contrôlés de sorte à contrôler l'environnement dans la zone d'interaction étanche.

Selon cette troisième alternative, le substrat peut être avantageusement une galette («wafer ») de silicium issue directement de la production avec les bords arrondis tels quels.

Le matériau du substrat est de préférence choisi parmi le silicium (Si), le germanium (Ge), le séléniure de zinc (ZnSe), le sulfure de zinc (ZnS), le saphir, des matériaux III-V tels que GaAs, ou InP, des chalcogénures ou des oxydes métalliques. Le système pourra facilement être adapté à tous ces substrats en utilisant de préférence des prismes réalisés dans le même matériau que le substrat mis en oeuvre ou dans un matériau d'indice proche pour obtenir un bon couplage optique.

Selon une variante préférée, le substrat est en silicium, de préférence sous la forme d'une galette. Le silicium a l'avantage d'être transparent dans la gamme infrarouge comprise entre 1500 à 9000 cm⁻¹. En microélectronique, le silicium est disponible sous forme de galettes de différents diamètres dont les faces sont parallèles. Les galettes (« wafers » en anglais) de diamètre 300 mm actuellement en production ont leur deux faces principales parallèles et polies et sont donc optimales pour mettre en oeuvre le procédé selon l'invention.

De préférence également, le matériau des prismes est choisi parmi le silicium, le germanium (Ge), le séléniure de zinc (ZnSe), le sulfure de zinc (ZnS) ou tout matériau transparent dans l'infrarouge, qui peut être façonné sous forme de prisme et qui présente un indice optique compatible avec l'indice du substrat dans l'infrarouge.

Selon une variante de réalisation avantageuse, il est prévu un joint périphérique logé dans une gorge périphérique de l'élément, autour de l'ouverture.

Les méplats sont de préférence agencés à l'aplomb du joint périphérique.

Selon une variante, les méplats peuvent être agencés en étant décalés du joint périphérique et à l'aplomb chacun d'une surface d'appui. Cette surface d'appui peut se trouver entre l'ouverture de chambre et le joint torique. Cette surface d'appui peut être réalisée avec une pièce en matériau rigide ou compressible. Selon cette variante, on découple en quelque sorte l'étanchéité et le serrage des prismes.

Selon un mode de réalisation avantageux, le dispositif selon l'invention comprend un ou plusieurs capteurs adapté(s) pour mesurer la pression et/ou la température et/ou le pH et/ou l'hygrométrie et/ou la composition à l'intérieur de la chambre. Ainsi, on peut contrôler précisément les différents paramètres du fluide injecté dans la chambre, et ce de manière aisée.

Le dispositif comprend de préférence un système de pompage adapté pour faire le vide dans la chambre.

Le dispositif peut comprendre également un système d'illumination, de préférence à ultra-violet ou à infra-rouge, de l'intérieur de la chambre.

Selon un mode de réalisation particulièrement avantageux, le substrat et les couples de primes sont en silicium, l'angle (α) des prismes d'un couple étant égal à 20°, celui des prismes de l'autre couple étant égal à 45°.

L'invention a enfin pour objet l'application du procédé ou du dispositif qui viennent d'être décrits, pour l'analyse d'un échantillon de matériau poreux, tel que SiOCH soumis à un environnement à taux d'hygrométrie contrôlé. Cette application est avantageuse pour l'industrie de la microélectronique. En effet, les matériaux poreux présentent des variations de propriétés chimiques lors des procédés d'intégration dans les puces électroniques qu'il est nécessaire d'analyser. Par exemple, des changements d'hydrophobicité peuvent intervenir dégradant les propriétés isolantes du matériau. Ces changements peuvent être étudiés en mesurant les pics caractéristiques de longueur d'ondes de l'eau à l'aide d'une spectroscopie infrarouge par réflexions internes multiples alors que l'on soumet le matériau poreux à des conditions d'hygrométrie variables mais contrôlées selon le procédé de l'invention.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- les figures 1A à 1E sont des vues schématiques illustrant les différentes étapes de préparation et d'analyse optique d'un échantillon solide selon la première alternative de l'invention;
- la figure 2 est une vue schématique de coupe transversale d'une partie d'un dispositif selon la première alternative de l'invention montrant les réflexions internes multiples au sein du substrat supportant l'échantillon solide ;
- la figure 3 est une vue schématique similaire à la figure 2 montrant la zone de couplage optique effective entre un prisme et le substrat conformes à l'invention;
- la figure 4 illustre les courbes de résultat des simulations numériques montrant la perte de transmittance optique entre les prismes en silicium et le substrat en silicium selon l'invention, en fonction de l'épaisseur de l'espace d'air les séparant et ce pour un angle α de 30° et une polarisation du faisceau infrarouge de type s ;
- la figure 5 illustre la courbe de résultat des simulations numériques montrant la perte de transmittance optique à une longueur d'onde de 2000 cm⁻¹ entre les prismes en silicium et le substrat selon l'invention, en fonction de la différence de leurs indices de réfraction et ce pour un angle α de 30° et une polarisation du faisceau infrarouge de type s;
- la figure 6 est une vue schématique de détail montrant la génération d'une onde évanescente dans une couche d'échantillon solide par la réflexion totale d'une onde infrarouge dans le substrat supportant la couche ;
- la figure 7 illustre les pics d'absorbance obtenus en spectroscopie infrarouge, à la surface d'un substrat en silicium nu respectivement en incidence normale et par réflexions internes multiples selon le procédé de l'invention ;
- la figure 8 est une vue schématique de coupe transversale d'un dispositif selon la première alternative de l'invention montrant le serrage d'étanchéité et de couplage optique entre un prisme et le substrat selon une première variante de l'invention;
- la figure 9 est une vue de dessus du dispositif selon la figure 8 montrant l'agencement relatif entre les différents composants d'un dispositif selon l'invention ;
- la figure 10 est une vue schématique de coupe transversale d'un dispositif selon la première alternative de l'invention montrant le serrage d'étanchéité et de couplage optique entre un prisme et le substrat selon une deuxième variante de l'invention;
- la figure 11 est une vue de dessus du dispositif selon la figure 10 montrant l'agencement relatif entre les différents composants d'un dispositif selon l'invention ;
- la figure 12 est une vue schématique de côté montrant un dispositif selon la première alternative de l'invention et permettant de soumettre la couche d'échantillon solide à un environnement en gaz contrôlé ;
- la figure 13 est une vue schématique de côté montrant un dispositif selon la première alternative de l'invention et permettant de soumettre la couche d'échantillon solide à un environnement en liquide contrôlé ;
- la figure 14 est une vue schématique de côté montrant une première variante d'alimentation en gaz d'un dispositif selon la figure 12 ;
- la figure 15 est une vue schématique de côté montrant une deuxième variante d'alimentation en gaz d'un dispositif selon la figure 12 ;
- la figure 16 est une vue schématique de côté montrant un dispositif selon une troisième variante de l'invention et permettant de soumettre la couche d'échantillon solide à un plasma, le plasma étant généré de manière déportée par rapport à la chambre ;
- la figure 17 est une vue schématique de côté montrant un dispositif selon la troisième variante de l'invention et permettant de soumettre la couche d'échantillon solide à un plasma, le plasma étant généré directement au sein de la chambre ;
- la figure 18 est une vue schématique de côté montrant un dispositif selon une autre variante de l'invention selon laquelle la chambre à environnement contrôlé est en outre illuminée par une source lumineuse;
- la figure 19 est une vue schématique de côté montrant un dispositif selon la deuxième alternative de l'invention et permettant de soumettre la couche d'échantillon solide à un environnement en gaz contrôlé ;
- la figure 20 est une vue schématique de côté montrant un dispositif selon la troisième alternative de l'invention et permettant de soumettre la couche d'échantillon solide à un environnement en gaz contrôlé ;
- la figure 21 est une vue schématique de côté montrant un dispositif selon la première alternative de l'invention et selon un mode de réalisation avantageux permettant une mesure absolue d'absorption lumineuse infrarouge.

Dans la description qui va suivre et dans l'ensemble de la demande, les termes « entrée », « sortie » sont utilisés par référence avec le sens d'un faisceau de lumière infrarouge depuis son émission jusqu'à sa réception après avoir subi les réflexions multiples internes à un substrat conforme à l'invention. Ainsi, le faisceau infrarouge est tout d'abord réfracté par un prisme d'entrée, subit de multiples réflexions internes au sein d'un substrat et en sort en étant réfracté par un prisme de sortie.

Les termes « dessus », « dessous », «sommet », « à l'aplomb », « supérieur », « inférieur » sont utilisés par référence à un dispositif selon l'invention en configuration installée avec un substrat à l'horizontal et sa face arrière sur le dessus. Ainsi, dans une telle configuration, un prisme est dessus le substrat lui-même au-dessus de la chambre alimentée en fluide contrôlé. Il va de soi, que d'autres configurations installées sont possibles. Par exemple, il est possible d'avoir une configuration avec un substrat et les prismes agencés à la verticale, les prismes étant alors d'un côté vertical du substrat et la chambre de l'autre côté vertical du substrat.

On précise que, conformément à l'invention, un faisceau infrarouge peut être polarisé linéairement selon s qui est une direction perpendiculaire au plan d'incidence ou selon p qui une direction parallèle au plan d'incidence.

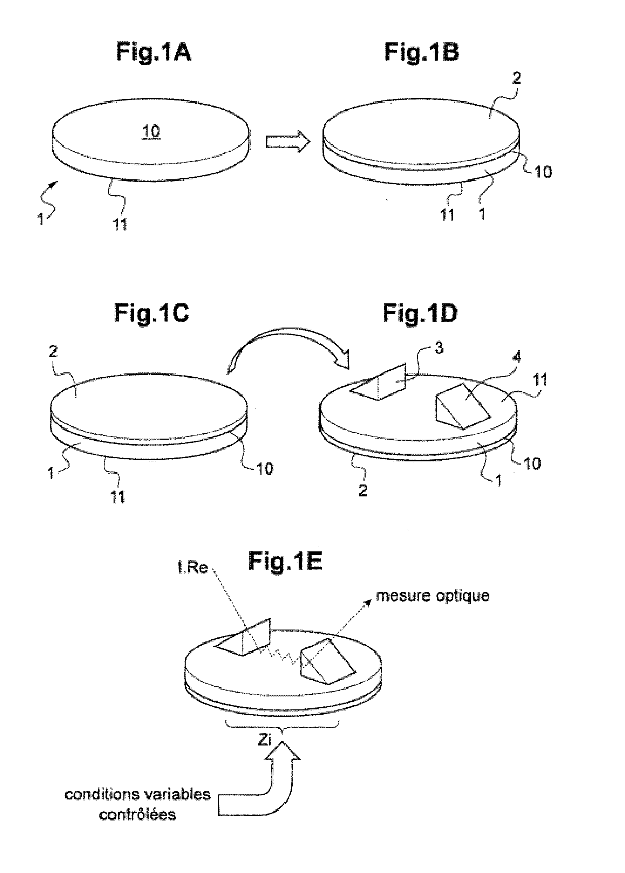

On décrit les différentes étapes de préparation et d'analyse optique d'un échantillon solide 2 par spectroscopie infrarouge à réflexions internes multiples selon la première alternative de l'invention en relation aux figures 1A à 1E.

On dispose d'un substrat 1 à deux faces principales, dont une face avant 10 et une face arrière (figure 1A).

Puis, on dépose une couche d'échantillon solide 2 à analyse sur la face avant 10 du substrat 1 (figure 1B). Un tel substrat 1 avec la couche 2 peut être réalisé facilement et de manière économique par exemple grâce aux procédés classiques de la microélectronique.

On retourne alors, le substrat 1 de telle sorte que sa face arrière 11 se trouve sur le dessus (figure 1D).

On met alors en place un couple de deux prismes 3, 4 directement en contact avec la face arrière 11 du substrat 1, les prismes étant agencés à distance l'une de l'autre (figure 1D). Comme illustré, les prismes 3, 4 sont avantageusement des blocs de forme triangulaire rectangle avec l'angle droit à 90° de la face arrière 11. L'angle α des prismes 3, 4 est choisi pour permettre une réflexion totale interne de la lumière sur les faces 10, 11 du substrat 1 supportant l'échantillon solide 2. Les faces 10, 11 du substrat sont parallèles et polies.

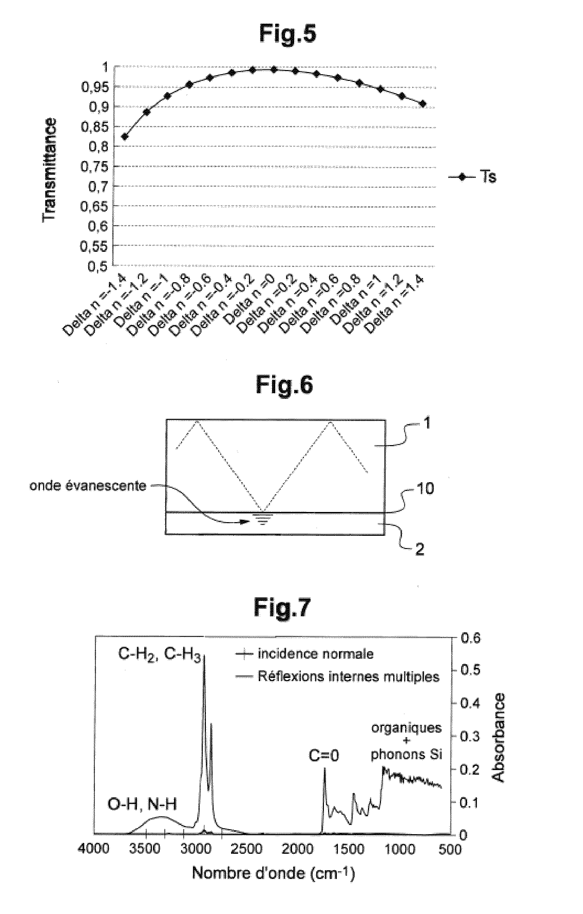

Une lumière infrarouge I.Re pénétrant dans le prisme d'entrée 3 peut être couplée et se propager dans le substrat 1 qui est optiquement transparent dans la gamme spectrale infrarouge de la lumière incidente. A chaque réflexion à la surface avant 10 du substrat, une onde sonde le matériau solide d'échantillon 2 déposé sur cette surface 10 du substrat 1 soit par propagation de la lumière directement dans l'échantillon solide, soit par une onde évanescente qui s'établit après le dioptre où a lieu la réflexion totale. Le dioptre peut être l'interface entre le substrat 1 et la couche d'échantillon 2 ou encore entre la couche d'échantillon 2 et l'environnement extérieur, c'est-à-dire celui qu'on contrôle selon l'invention. Autrement dit, suivant les indices optiques du substrat et de la ou des couche(s) d'échantillon en présence, l'onde évanescente s'établit dans les couches succédant au dioptre où a lieu la réflexion totale. Sur la figure 6, on a représenté une situation dans laquelle l'onde évanescente s'établit à l'interface entre la face avant 10 du substrat 1 et la couche d'échantillon solide 2.

Une fois, ce couplage optique obtenu avec les multiples réflexions internes au moins une partie de la couche d'échantillon 2 est placée en regard d'une chambre 6 permettant de contrôler l'environnement fluidique proche de la surface de la couche 2. Ainsi, selon l'invention les interactions entre un environnement contrôlé qui peut être variable et l'échantillon 2 sont alors analysées grâce à la mesure optique par réflexions internes multiples au substrat 1 (figure 1 E). La mesure optique est une mesure de transmittance (T=I_{éch}/I_{ref}) ou d'absorbance (A=log₁₀(1/T)) du faisceau à sa sortie I.Rs (Iéch) du substrat 1 supportant l'échantillon 2 moyennant une mesure de référence (Iréf) préalable sur un substrat nu par exemple. On peut obtenir la valeur de la transmission Tr en pourcentages, à partir de la relation suivante : Tr = 100*T.

Avec deux prismes en silicium 3, 4 il est possible de coupler une lumière infrarouge de nombre d'onde compris entre 1500 et 9000 cm⁻¹, à l'intérieur d'un substrat de silicium 1 dont l'épaisseur est de l'ordre de 800 µm dans le cas d'un substrat sous la forme d'une galette de diamètre 300 mm.

Différentes formes de prismes peuvent convenir la plus simple étant triangulaire avec un angle droit, comme illustré en figures 1A à 1E.

Selon une variante avantageuse, chacun des prismes 3, 4 présente un méplat en leur sommet afin de pouvoir appliquer facilement la force de serrage du prisme contre la face arrière 11 du substrat. Toute ou partie de la base d'un prisme 3, 4 peut être placée en contact avec la face arrière 11.

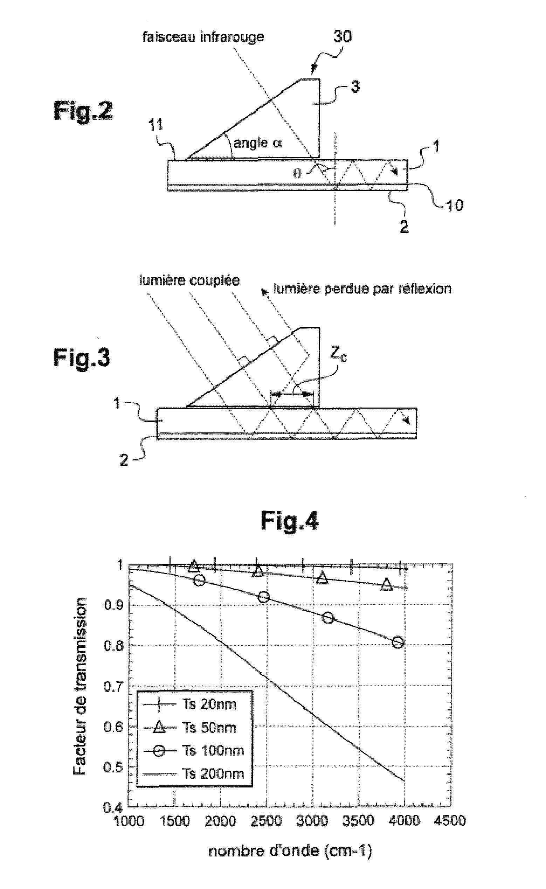

L'angle α des prismes 3, 4 est choisi pour permettre des réflexions totales internes de la lumière sur les deux faces 10, 11 du substrat comme symbolisé en pointillés sur la figure 2. Ces réflexions internes totales peuvent se produire si l'angle de propagation θ entre le faisceau en entrée I.Re et la normale au substrat 1 est supérieur à un angle critique θ_{c}. Pour du silicium d'indice n_{Si}=3,42 dans l'infrarouge, l'angle d'incidence critique θ_{c} à partir duquel il y a réflexion totale à l'interface silicium/air est d'environ 17° (θ_{c}=arcsin(l/n_{Si})). Afin de tenir compte de la divergence du faisceau infrarouge, de la présence d'une couche de surface d'indice différent de l'air tout en gardant un grand nombre de réflexions internes, on envisage de préférence des prismes 3, 4 d'angle α compris entre 20° et 60°. Dans le cas d'une incidence normale sur un prisme d'entrée 3, et si le prisme 3 et le substrat 1 sont constitués d'un même matériau, les angles α et θ seront égaux.

Pour optimiser la mesure optique avec une meilleure efficacité de couplage optique, le faisceau infrarouge est polarisé linéairement selon s. Une polarisation s permet également de limiter les pertes par réflexion et les effets de changement de polarisation à la réfraction dans le prisme. Le point critique est le positionnement du faisceau infrarouge pour obtenir le couplage dans le substrat. En effet, seule une petite portion du faisceau peut passer dans le substrat 1 et y rester piégée, définissant ainsi une zone de couplage optique Zc comme illustré en figure 3. La largeur d'une telle zone de couplage Zc est égale à 2*e*tanθ, e étant l'épaisseur du substrat. Par exemple, la largeur d'une zone de couplage Zc vaut 923,8 µm pour un substrat en silicium 1 de 800 µm d'épaisseur et un angle de propagation θ de 30°. Comme illustré en figure 3, la zone de couplage Zc est située proche de l'angle droit du prisme 3.

Un espace d'air résiduel e est présent entre chacun des prismes 3, 4 et le substrat 1 du fait des irrégularités présentes sur les surfaces en regard.

Les inventeurs ont réalisé des simulations numériques pour évaluer la perte de transmittance optique entre un prisme 3 en silicium et un substrat 1 en silicium en fonction de l'épaisseur Ts de l'espace d'air pour un angle α de 30° et une polarisation s en fonction du nombre d'onde du faisceau infrarouge. Les résultats de ces simulations sont montrés sous forme de courbes en figure 4. De ces résultats, on peut en conclure qu'une épaisseur moyenne Ts de l'espace d'air permettant un bon couplage optique peut être typiquement de l'ordre de quelques dizaines de nanomètres. On veille donc à appliquer un effort de serrage conséquent, afin de minimiser cet espace d'air. Par exemple, un couple de serrage de l'ordre de 0,1 Nm convient.

Les inventeurs ont également réalisé des simulations numériques pour évaluer les pertes de transmittance entre prisme et substrat et vice-versa, pour un substrat en un matériau différent de celui des prismes en silicium. Les simulations ont été faites à une longueur d'onde de 2000 cm⁻¹ en faisant varier l'écart d'indice optique entre prismes et substrat, en fixant l'espace d'air Ts à 40 nm, l'angle α étant à 30° et ce pour une polarisation s. Les résultats de ces simulations sont montrés sous forme de courbe en figure 5. On précise que sur cette courbe Delta n signifie la différence d'indice entre prismes 3, 4 et substrat 1. On précise également que la transmittance en polarisation s représentée est égale au produit de la transmittance entre le prisme d'entrée 3 et le substrat 1 et celle entre le substrat 1 et le prisme de sortie 4. De cette courbe, on en conclue que les pertes de transmittance sont raisonnables même pour des différentes d'indice notable puisque la perte est égale à 0,05 pour un écart d'indice de 0,8 et à 0,1 pour un écart d'indice de 1,4.

Une fois le couplage optique de la lumière effectif, on sonde à chaque réflexion à la surface de la face avant 10 du substrat 1, le matériau d'échantillon 2 déposé sur cette face soit par propagation de la lumière directement dans l'échantillon solide, soit par une onde évanescente qui s'établit après le dioptre où a lieu la réflexion totale, comme cela est symbolisé en figure 6. Le spectre infrarouge détecté après parcours dans le substrat 1 contient l'information de l'interaction du faisceau infrarouge avec la surface 10 du substrat. Dans le cas où le matériau solide de l'échantillon est sondé par une onde évanescente, la profondeur de cette onde dépend entre autres de l'angle de propagation θ. Plus celui-ci est proche de l'angle critique θc plus l'onde évanescente est grande et permet de sonder une couche d'échantillon 2 épaisse.

L'avantage d'une telle configuration est de pouvoir sonder la surface à chaque réflexion interne. En fonction de l'angle α des prismes 3, 4 et de la distance entre le prisme d'entrée 3 et de sortie 4, on peut générer de l'ordre d'une centaine de réflexions internes. Par exemple, on peut obtenir un nombre égal à 108 réflexions internes pour un substrat 1 de 800 µm d'épaisseur, une distance entre prismes 3, 4 de l'ordre de 5 cm et un angle de propagation θ dans le substrat de 30°. Ainsi, la mesure d'un échantillon 2 par réflexions internes multiples présente une grande sensibilité, du même ordre que le nombre de réflexions internes par rapport à une mesure classique par transmission infrarouge en incidence normale. Ceci est illustré sur la figure 7 où l'on voit par comparaison que la contamination organique à la surface d'un substrat en silicium est bien détectée par une mesure en réflexions internes multiples selon l'invention mais quasiment pas par la mesure en incidence normale.

Pour soumettre la couche d'échantillon solide 2 à un environnement contrôlé conformément à l'invention, qui est représentatif de conditions in-situ, on met en place un élément 6, que l'on peut désigner comme étant une cellule de confinement.

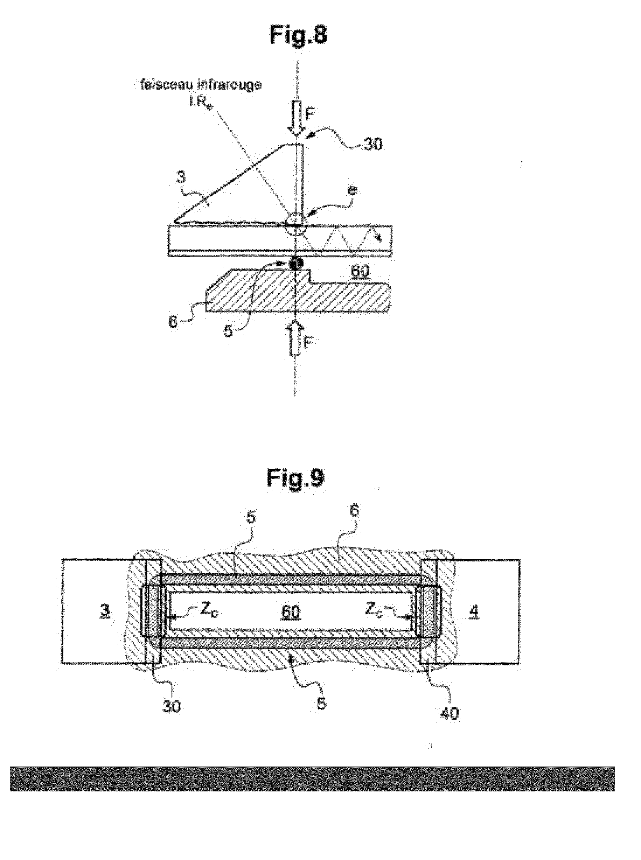

Une telle cellule 6 comprend une chambre 60 avec une ouverture 61 rendue étanche vis-à-vis de l'extérieur par un joint torique périphérique 5 (figure 8). La couche d'échantillon 2 à analyser est placée en regard de l'ouverture 61 de la chambre 60 puis les prismes 3, 4 sont serrés contre la face arrière 11 du substrat 1 et maintenus à l'aide d'un système de serrage non représenté. La force de serrage, symbolisée par les flèches F en figure 8, permet à la fois de réaliser le couplage optique entre les prismes 3, 4 et le substrat 1 et l'étanchéité proprement dite entre la chambre 60 délimitée par la couche 2 et l'extérieur.

Le joint torique 5 facilite également le serrage des prismes sans casser le substrat.

Afin de réaliser de manière optimale le couplage respectivement le découplage de la lumière dans le substrat et de la propager dans la zone d'interaction Zi entre couche d'échantillon 2 et fluide présent dans la chambre 60, la zone de couplage Zc du prisme, une partie périphérique du joint torique 5 ainsi que le méplat 30,40 du prisme d'entrée 3 respectivement de sortie 4 sont alignés avec l'axe où la force de serrage est appliquée, tel qu'illustré en figures 8 et 9. Cela permet en outre de minimiser l'espace d'air entre chacun des prismes 3, 4 et le substrat 1 dans cette zone de couplage Zc. Puis, le faisceau infrarouge I.Re est aligné pour venir atteindre la zone de couplage Zc au niveau de l'interface entre chaque prisme 3, 4 et le substrat 1.

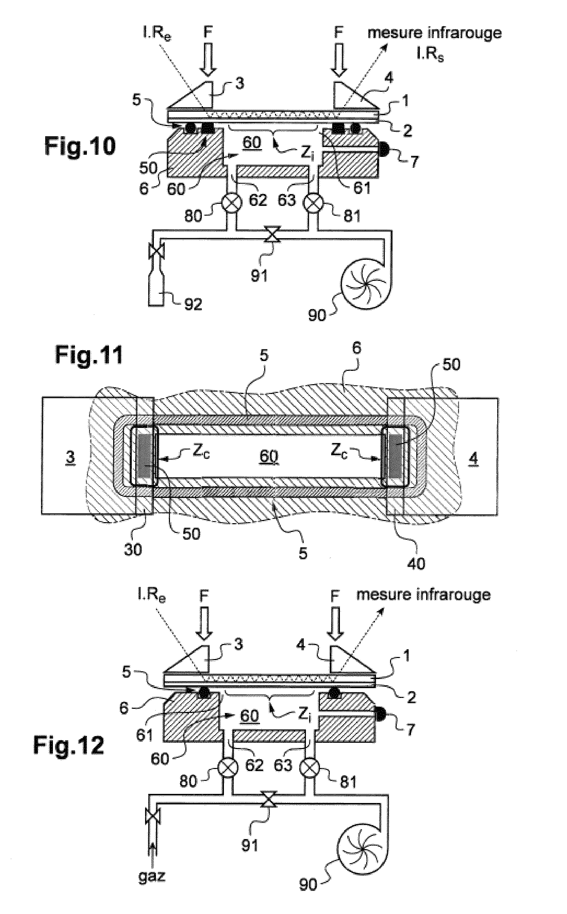

A titre de variante, on peut prévoir de réaliser un découplage entre le serrage du joint d'étanchéité 5 et le serrage des prismes 3,4. Un telle variante est montrée en figures 10 et 11 : il est prévu de loger une pièce formant surface d'appui 50 dans une gorge de la cellule 6 en regard de chaque méplat 30, 40 de prisme 3, 4. Autrement dit, les méplats 30, 40 sont agencés en étant décalés du joint périphérique 5 et à l'aplomb des surfaces d'appui 50. Le serrage des prismes 3, 4 est ainsi réalisé par contre-effort de la force de serrage sur la face avant 10 ou l'échantillon solide 2.

Selon un premier mode de réalisation, on peut soumettre la couche d'échantillon 2 à un gaz aux paramètres contrôlés. On peut ainsi prévoir un système de pompage 90 associé à des vannes 80, 81 permettant de faire le vide dans la chambre 60 et les canalisations et ouverture 62 d'alimentation et celles 63 d'extraction, avant l'alimentation proprement dite du gaz de manière contrôlée afin d'interagir avec l'échantillon solide 2 dans la zone d'interaction Zi (figure 12). Un ou des capteurs 7 peuvent être agencés sur la cellule 6 afin de contrôler divers paramètres à l'intérieur de la chambre 60, tels que pression, température, composition....

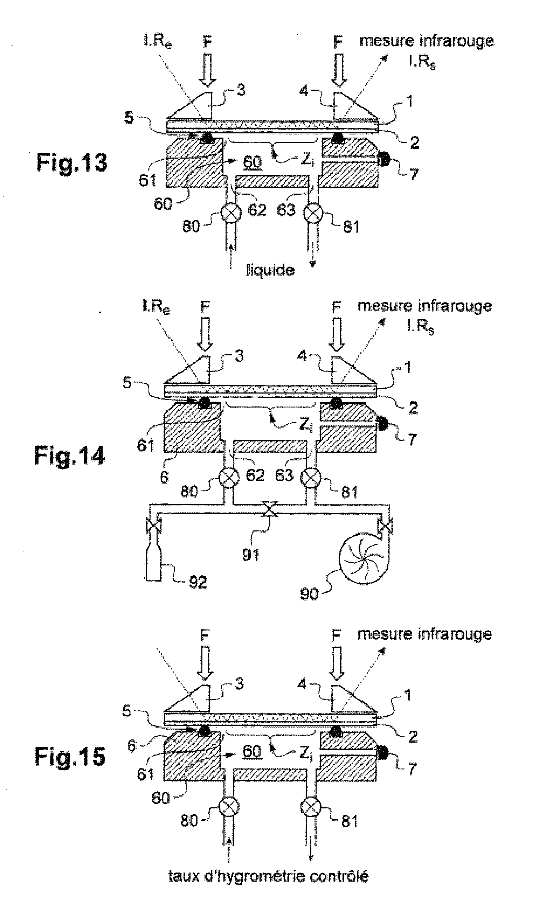

Selon un deuxième mode de réalisation, on peut soumettre la couche d'échantillon 2 à un liquide aux paramètres contrôlés. Un système d'alimentation extraction avec vannes adaptées 80, 81 permet ainsi de faire circuler du liquide de manière contrôlée afin d'interagir avec l'échantillon 2 (figure 13). Un ou des capteurs 7 peuvent être agencés sur la cellule 6 afin de contrôler divers paramètres à l'intérieur de la chambre 60, tel que pH, température, composition....

Une première variante de réalisation de la cellule 6 sous gaz est montrée en figure 14. Selon cette variante, le gaz est généré à partir d'un réservoir de liquide 92 qui s'évapore quand la chambre 60 et les canalisations sont sous vide.

Une deuxième variante de réalisation consiste à injecter dans la chambre 60 un gaz porteur plus ou moins saturé en humidité et d'en contrôler son taux d'hygrométrie (figure 15).

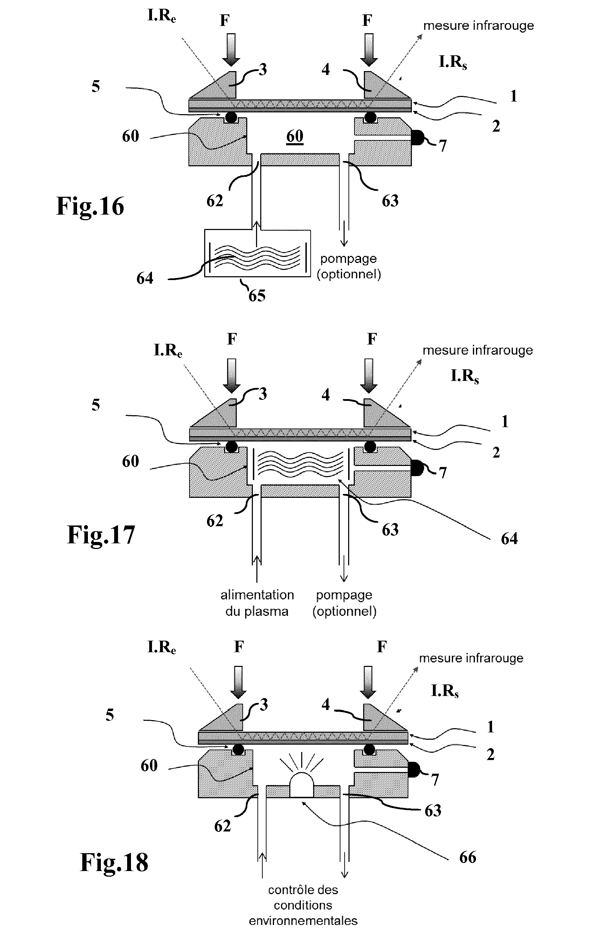

Selon une troisième variante de réalisation, on peut soumettre la couche d'échantillon 2 à un environnement constitué d'espèces réactives. Les espèces réactives (radicaux) peuvent être issues d'un plasma 64 ou d'une interaction de molécules avec un filament chauffé, afin qu'elles interagissent avec la surface. Le plasma peut être établi de manière déportée, c'est-à-dire généré dans un générateur d'espèces réactives 65 à distance de la chambre 60 et en communication avec elle par les canalisation et ouverture 62 d'alimentation (figure 16). Alternativement, le plasma 64 peut être généré directement dans la chambre 60 (figure 17) : dans ce cas, il y a aussi présence d'ions et de rayonnement ultraviolet, en plus des radicaux du plasma 64. La chambre 60 peut être sous vide ou à pression atmosphérique dans le cas d'un plasma atmosphérique. Avantageusement, la couche d'échantillon solide 2 peut être conductrice est servir d'une des électrodes pour générer le plasma, favorisant ainsi le bombardement ionique à la surface de l'échantillon 2.

Une autre variante de l'invention illustrée en figure 18 consiste à utiliser un système d'illumination 66 qui illumine l'intérieur de la chambre 60. Ce système 66 peut être couplé ou non avec le système de contrôle des conditions environnementales à l'intérieur de la chambre 60. Le système d'illumination peut être avantageusement une lumière ultraviolette (UV) qui favorise ainsi la décontamination ou la stérilisation des surfaces et en particulier celle de l'échantillon 2. Le système 66 peut aussi être une lumière infrarouge afin de provoquer un échauffement de la surface de l'échantillon 2. La source lumineuse 66 peut être monochromatique (laser) ou à large gamme d'émission.

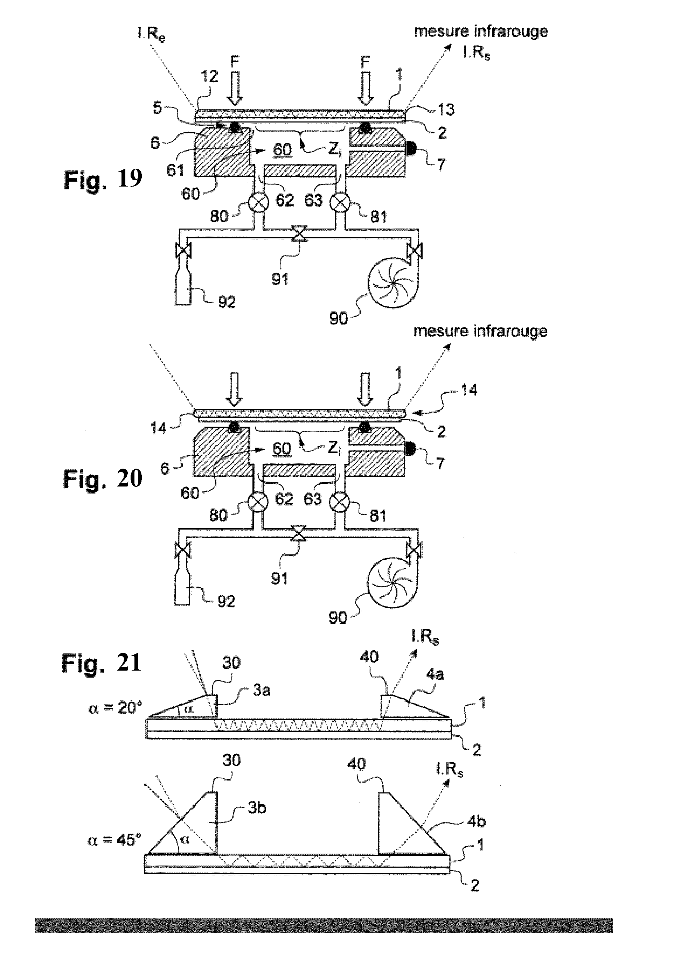

Une deuxième alternative selon l'invention est montrée en figure 19. En lieu et place des prismes 3, 4, on peut prévoir de biseauter les bords du substrat 1 entre sa face avant 10 et sa face arrière 11. Les biseaux obtenus 12, 13 permettent de piéger la lumière infrarouge dans le substrat 1 et de lui faire subir des réflexions internes multiples (figure 19).

Une troisième alternative selon l'invention est montrée en figure 20. En lieu et place des prismes 3, 4, ou des biseaux 12, 13, on peut prévoir un substrat 1 avec deux bords arrondis 14 entre sa face avant 10 et sa face arrière 11. Les arrondis 14 permettent de piéger la lumière infrarouge dans le substrat 1 et de lui faire subir des réflexions internes multiples (figure 20). Selon ces deuxième et troisième alternatives, on veille à ce que le système de serrage du joint 5 ne modifie pas la condition de réflexion interne en l'éloignant du voisinage du faisceau optique.

Le dispositif tel que décrit en référence aux figures 1 à 20 ne permet, pour chaque condition d'environnement contrôlé, que de réaliser des mesures relatives d'absorption par rapport à une mesure de référence, par exemple le substrat nu ou la première mesure sous vide.

On peut améliorer ces mesures en réalisant des mesures absolues d'absorption en soustrayant à chaque condition deux mesures ayant un chemin optique différent.

Autrement dit, il s'agit de réaliser deux mesures consécutives avec des angles de propagation différents. Pour ce faire, on peut agencer sur la face arrière 11 du substrat 1 deux couples de prismes de nature ou d'angle différents en parallèle.

Un tel mode avantageux avec deux couples de prismes respectivement 3a, 4a et 3b, 4b d'angle différent est montré en figure 21. Ainsi les prismes 3a, 4a ont un angle égal à 20° tandis que les prismes 3a, 4b ont un angle égale à 45°. A distance entre deux prismes égale, la différence de chemin optique dépendra juste de l'angle de propagation dans le substrat 1.

Une mesure pour chaque angle de propagation est réalisée à chaque condition d'environnement contrôlé dans la chambre 60. Puis, on normalise, c'est-à-dire on met en référence, la mesure faite avec l'angle de propagation le plus petit par celle faite avec l'angle le plus grand afin d'obtenir la mesure absolue (auto-référencée) de l'absorption infrarouge de la couche d'échantillon 2.

Selon ce mode, on sélectionne avantageusement le couple de prismes 3a, 4a ; 3b, 4b sans qu'il n'y ait besoin de réaligner le faisceau optique entre les mesures. Par exemple, en montant deux couples de prismes en silicium respectivement de 20° et 45° sur un substrat 1 aligné pour des prismes de propagation égal à 30°, on obtient deux angles de propagation de respectivement 22,9° et 40,7°. Par ailleurs, on veille à ce que le dispositif selon ce mode à deux couples de prisme prenne en compte les contraintes de couplage optique de la lumière décrites précédemment, c'est-à-dire essentiellement la réfraction du faisceau dans l'angle droit du prisme d'entrée 3 et le serrage dans l'axe de cet angle droit.

L'invention qui décrit permet une analyse optique en environnement contrôlé d'une couche d'échantillon solide 2 déposée sur la face avant 10 du substrat 1. En lieu et place d'une couche, on peut prévoir une préparation et/ ou un conditionnement de surface de la face avant 10 d'un substrat, par exemple par nettoyage, gravure,...pour en analyser son interaction avec un environnement contrôlé.

D'autres variantes et améliorations peuvent être prévues sans pour autant sortir du cadre de l'invention.

L'invention n'est pas limitée aux exemples qui viennent d'être décrits ; on peut notamment combiner entre elles des caractéristiques des exemples illustrés au sein de variantes non illustrées.

### REFERENCES CITEES

[1]: M. Olivier, N. Rochat, et al. : «Infrared Study of Hydrogen in Ultra-Thin Silicon Nitride Films Using Mutiple Internal Reflection Spectroscopy (MIR) in 200 mm Silicon Wafers » (1999), Physica Status Solidi A175(1): 137-143 ;
[2]: N. Rochat, M. Olivier, et al. : «Multiple internal reflection Infrared Spectroscopy using two-prism coupling geomrtry : A convenient way for quantitative study of organic contamination on silicon wafers » (2000), Applied Physics Letters 77(14): 2249-2251 ;
[3]: N. J. Harrick : «Internal Reflection Spectroscopy», Book Chapter 4, Harrick Scientific corporation.

## Revendications

1. Procédé de préparation et d'analyse optique d'un échantillon solide (2) par spectroscopie infrarouge à réflexions internes multiples, le procédé comprenant les étapes suivantes :
a/ réalisation d'au moins un échantillon solide (2) sur une des faces principales, dite face avant (10), d'un substrat (1) transparent à une lumière infrarouge,
b/ mise en place d'au moins une partie d'au moins un couple de prismes (3,4 ; 3a, 4a ; 3b, 4b) à distance l'un de l'autre, sur l'autre des faces principales, dite face arrière (11) du substrat, l'angle (α) des prismes étant adapté pour permettre des réflexions multiples internes au substrat d'une lumière infrarouge réfractée par l'un des prismes,
c/ mise en place étanche sur le substrat, autour d'au moins une partie de l'échantillon, d'un élément (6) comprenant une chambre (60) présentant une ouverture (61), de sorte que l'ouverture débouche sur l'échantillon solide en définissant une zone d'interaction étanche (Zi) vis-à-vis de l'extérieur de la chambre,
d/ alimentation de la chambre (60) avec un fluide aux paramètres contrôlés de sorte à contrôler l'environnement dans la zone d'interaction étanche,
e/ envoi d'un faisceau lumineux infrarouge (I.Re) au travers de l'un (3, 3a, 3b) des prismes d'un couple,
f/ récupération du faisceau (I.Rs) ayant subi des réflexions internes multiples dans le substrat et réémis par l'autre des prismes (4, 4a, 4b) du couple.

2. Procédé de préparation et d'analyse optique d'un échantillon solide par spectroscopie infrarouge à réflexions internes multiples, le procédé comprenant les étapes suivantes :
a/ réalisation d'au moins un échantillon solide (2) sur une des faces principales, dite face avant (10), d'un substrat (1) transparent à une lumière infrarouge,
b'/ biseautage d'au moins deux bords du substrat entre la face avant et la face arrière, l'angle des biseaux (12, 13) étant adapté pour permettre des réflexions multiples internes au substrat d'une lumière infrarouge (I-Re) réfractée par l'un des biseaux (12),
c/ mise en place étanche sur le substrat, autour d'au moins une partie de l'échantillon, d'un élément (6) comprenant une chambre (60) présentant une ouverture (61), de sorte que l'ouverture débouche sur l'échantillon solide en définissant une zone d'interaction étanche (Zi) vis-à-vis de l'extérieur de la chambre,
d/ alimentation de la chambre (60) avec un fluide aux paramètres contrôlés de sorte à contrôler l'environnement dans la zone d'interaction étanche,
e'/ envoi d'un faisceau lumineux infrarouge au travers d'un des bords biseautés (12) du substrat,
f'/ récupération du faisceau ayant subi des réflexions internes multiples dans le substrat et réémis par l'autre des bords biseautés (13) du substrat.

3. Procédé de préparation et d'analyse optique d'un échantillon solide par spectroscopie infrarouge à réflexions internes multiples, le procédé comprenant les étapes suivantes :
a/ réalisation d'au moins un échantillon solide (2) sur une des faces principales, dite face avant (10), d'un substrat (1) transparent à une lumière infrarouge,
b"/ fourniture d'un substrat à au moins deux bords arrondis (14) entre la face avant et la face arrière, l'arrondi des bords (14) étant adapté pour permettre des réflexions multiples internes au substrat d'une lumière infrarouge réfractée par l'un des bords (14),
c/ mise en place étanche sur le substrat, autour d'au moins une partie de l'échantillon, d'un élément (6) comprenant une chambre (60) présentant une ouverture (61), de sorte que l'ouverture débouche sur l'échantillon solide en définissant une zone d'interaction étanche (Zi) vis-à-vis de l'extérieur de la chambre,
d/ alimentation de la chambre (60) avec un fluide aux paramètres contrôlés de sorte à contrôler l'environnement dans la zone d'interaction étanche,
e"/ envoi d'un faisceau lumineux infrarouge au travers d'un des bords arrondis (14) du substrat,
f"/ récupération du faisceau ayant subi des réflexions internes multiples dans le substrat et réémis par l'autre des bords arrondis (14) du substrat.

4. Procédé selon l'une des revendications 1 à 3, le fluide alimentant la chambre étant un liquide dont on contrôle la température et/ou la pression et/ou le pH et/ou la composition.

5. Procédé selon l'une des revendications 1 à 3, le fluide alimentant la chambre étant un gaz dont on contrôle la température et/ou la pression et/ou le taux d'hygrométrie.

6. Procédé selon la revendication 5, comprenant une étape g/ de mise sous vide de la chambre avant l'étape d/ d'alimentation avec le gaz.

7. Procédé selon la revendication 6, l'étape d/ d'alimentation étant réalisée depuis un réservoir de liquide (92) qui s'évapore dans la chambre (60) maintenue sous vide.

8. Procédé selon la revendication 6, l'étape d/ d'alimentation étant réalisée avec un gaz à taux d'hygrométrie donné, contrôlé dans la chambre.

9. Procédé selon la revendication 6, l'étape d/ d'alimentation étant réalisée avec des espèces réactives, de préférence un plasma, contrôlées dans la chambre.

10. Procédé selon l'une des revendications précédentes, l'étape c/ de mise en place étanche de l'élément comprenant le serrage d'un joint (5) périphérique autour de l'ouverture (61) contre la face avant (10) du substrat.

11. Procédé selon l'une des revendications 1 à 9, l'étape c/ de mise en place étanche de l'élément comprenant le serrage d'un joint périphérique (5) autour de l'ouverture (61) contre la face avant (10) du substrat, le serrage du joint étant appliqué simultanément sur les prismes (3,4) pour les appuyer contre la face arrière (11) du substrat.

12. Procédé selon la revendication 11, les prismes comprenant chacun un méplat (30, 40) sur leur sommet, les axes de serrage étant alignés avec les méplats et le joint.

13. Procédé selon l'une des revendications 1 et 4 à 12, l'étape b/ consistant en la mise en place d'au moins une partie de deux couples de prismes (3a, 4a ; 3b, 4b), l'angle des prismes et/ou le matériau d'un couple étant différent(s) de celui (ceux) de l'autre couple, la distance entre les deux prismes d'un couple étant égale à celle entre les deux prismes de l'autre couple,
les étapes e/ et f/ étant répétées deux fois consécutivement, une fois avec l'un des couples de prismes (3a, 4a) et la fois consécutive avec l'autre des couples de prismes (3b, 4b).

14. Dispositif de préparation et d'analyse optique d'un échantillon solide par spectroscopie infrarouge à réflexions internes multiples comprenant :
- un substrat (1) présentant deux faces principales, dont une dite face avant (10) et l'autre dite face arrière (11), et présentant au moins un échantillon solide (2) sur la face avant (10);
- au moins un couple de prismes (3, 4 ; 3a, 4a ; 3b, 4b) agencés à distance l'un de l'autre et au moins en partie sur la face arrière (11) du substrat, l'angle des prismes étant adapté pour permettre des réflexions multiples internes au substrat d'une lumière infrarouge réfractée (I.Re) par l'un des prismes (3, 3a, 3b);
- un élément (6) comprenant une chambre (60) présentant une ouverture (61) débouchant sur l'échantillon solide (2) en définissant une zone d'interaction étanche (Zi) vis-à-vis de l'extérieur de la chambre, la chambre étant adaptée pour être alimentée avec un fluide aux paramètres contrôlés de sorte à contrôler l'environnement dans la zone d'interaction étanche.

15. Dispositif selon la revendication 14, le substrat (1) étant en un matériau d'indice de réfraction égal à celui des prismes (3, 4 ; 3a, 4a ; 3b, 4b).

16. Dispositif selon la revendication 14, le substrat (1) étant en un matériau d'indice de réfraction différent de celui des prismes (3, 4 ; 3a, 4a ; 3b, 4b).

17. Dispositif selon l'une des revendications 14 à 16, chacun des prismes comprenant un méplat (30, 40) sur son sommet.

18. Dispositif selon l'une des revendications 14 à 17, comprenant deux couples de prismes (3a, 4a ; 3b, 4b), l'angle des prismes et/ou le matériau d'un couple étant différent(s) de celui (ceux) de l'autre couple, la distance entre les deux prismes d'un couple étant égale à celle entre les deux prismes de l'autre couple.

19. Dispositif selon l'une des revendications 14 à 18, l'angle (α) des prismes d'un couple étant compris entre 20 et 60°.

20. Dispositif de préparation et d'analyse optique d'un échantillon solide par spectroscopie infrarouge à réflexions internes multiples comprenant :
- un substrat (1) présentant deux faces principales, dont une dite face avant (10) et l'autre dite face arrière (11), et présentant au moins un échantillon solide (2) sur la face avant (10), le substrat présentant au moins deux biseaux (12, 13) entre la face avant (10) et la face arrière (13), l'angle des biseaux étant adapté pour permettre des réflexions multiples internes au substrat d'une lumière infrarouge réfractée par l'un des biseaux,
- un élément (6) comprenant une chambre (60) présentant une ouverture (61) débouchant sur l'échantillon solide en définissant une zone d'interaction étanche (Zi) vis-à-vis de l'extérieur de la chambre, la chambre étant adaptée pour être alimentée avec un fluide aux paramètres contrôlés de sorte à contrôler l'environnement dans la zone d'interaction étanche.

21. Dispositif de préparation et d'analyse optique d'un échantillon solide par spectroscopie infrarouge à réflexions internes multiples comprenant :
- un substrat (1) présentant deux faces principales, dont une dite face avant (10) et l'autre dite face arrière (11), et présentant au moins un échantillon solide (2) sur la face avant (10), le substrat présentant au moins deux bords arrondis (14) entre la face avant (10) et la face arrière (13), l'arrondi des bords étant adapté pour permettre des réflexions multiples internes au substrat d'une lumière infrarouge réfractée par l'un des bords,
- un élément (6) comprenant une chambre (60) présentant une ouverture (61) débouchant sur l'échantillon solide en définissant une zone d'interaction étanche (Zi) vis-à-vis de l'extérieur de la chambre, la chambre étant adaptée pour être alimentée avec un fluide aux paramètres contrôlés de sorte à contrôler l'environnement dans la zone d'interaction étanche.

22. Dispositif selon l'une des revendications 14 à 21, le matériau du substrat étant choisi parmi le silicium (Si), le germanium (Ge), le séléniure de zinc (ZnSe), le sulfure de zinc (ZnS), le saphir, des matériaux III-V tels que GaAs, ou InP, des chalcogénures ou des oxydes métalliques.

23. Dispositif la revendication 22, le substrat étant en silicium, de préférence sous forme d'une galette.

24. Dispositif selon l'une des revendications 14 à 23, le matériau des prismes étant choisi parmi le silicium, le germanium (Ge), le séléniure de zinc (ZnSe), le sulfure de zinc (ZnS).

25. Dispositif selon l'une des revendications 14 à 24, comprenant un joint périphérique (5) logé dans une gorge périphérique de l'élément (6), autour de l'ouverture (60).

26. Dispositif selon la revendication 17 en combinaison avec la revendication 16, les méplats (30, 40) étant agencés à l'aplomb du joint périphérique (5).

27. Dispositif selon la revendication 17 en combinaison avec la revendication 16, les méplats (30, 40) étant agencés en étant décalés du joint périphérique (5) et à l'aplomb chacun d'une surface d'appui (50).

28. Dispositif selon l'une des revendications 14 à 27, comprenant un ou plusieurs capteurs (7) adapté(s) pour mesurer la pression et/ou la température et/ou le pH et/ou l'hygrométrie à l'intérieur de la chambre (60).

29. Dispositif selon l'une des revendications 14 à 28, comprenant un système de pompage (90) adapté pour faire le vide dans la chambre (60).

30. Dispositif selon l'une des revendications 14 à 29, comprenant un système d'illumination (66), de préférence à ultra-violet ou à infra-rouge, de l'intérieur de la chambre (60).

31. Dispositif selon la revendication 18 en combinaison avec la revendication 22, le substrat et les couples de primes étant en silicium, l'angle (α) des prismes d'un couple étant égal à 20°, celui des prismes de l'autre couple étant égal à 45°.

32. Application du procédé selon l'une des revendications 1 à 13 ou du dispositif selon l'une des revendications 14 à 31, pour l'analyse d'un échantillon de matériau poreux, tel que SiOCH soumis à un environnement à taux d'hygrométrie contrôlé.
